# EUROPÄISCHE PATENTSCHRIFT

(11) **EP 1 955 480 B1**
(45) Veröffentlichungstag und Bekanntmachung des Hinweises auf die Patenterteilung: **30.12.2009**
(21) Anmeldenummer: 06819771.4
(22) Anmeldetag: 27.11.2006
(51) Int. Cl.: H04L 12/24, H04L 12/413

(54) **NETZWERK MIT REDUNDANZEIGENSCHAFTEN, ETHERNET-SWITCH FÜR EIN DERARTIGES NETZWERK SOWIE VERFAHREN ZUR KONFIGURATION EINES DERARTIGEN NETZWERKS**
NETWORK HAVING REDUNDANCY PROPERTIES, ETHERNET SWITCH FOR SUCH A NETWORK, AND METHOD FOR CONFIGURING SUCH A NETWORK
RÉSEAU AYANT DES PROPRIÉTÉS DE REDONDANCE, COMMUTATEUR ETHERNET POUR UN RÉSEAU DE CE TYPE ET PROCÉDÉ DE CONFIGURATION D UN RÉSEAU DE CE TYPE

(30) Priorität: 30.11.2005 DE 102005057122
(43) Veröffentlichungstag der Anmeldung: 13.08.2008
(73) Patentinhaber: SIEMENS AKTIENGESELLSCHAFT, 80333 München (DE)
(72) Erfinder: KÖSTNER, Michael, 76870 Kandel (DE); LOHMEYER, Joachim, 91161 Hilpoltstein (DE); THRUM, Harald, 76297 Stutensee (DE)
(86) Internationale Anmeldenummer: PCT/EP2006/068940
(87) Internationale Veröffentlichungsnummer: WO 2007/063045

(56) Entgegenhaltungen:
- EP-A1- 1 260 081
- CN-A- 1 665 198
- US-A- 5 537 532
- US-A1- 2005 281 191
- US-A1- 2006 106 968

## Beschreibung

Die Erfindung betrifft ein Netzwerk mit Redundanzeigenschaften, das einer Ethernet-Spezifikation genügt und das zumindest zwei, mit mehreren Ethernet-Switches gebildete Netzwerksegmente enthält, die über eine redundante Verbindung aus zumindest zwei Koppelkanälen miteinander verbunden sind, einen Ethernet-Switch für ein derartiges Netzwerk sowie ein Verfahren zur Konfiguration eines derartigen Netzwerks.

Aus der EP 1 260 081 B1 sind bereits verschiedene Netzwerke mit Redundanzeigenschaften bekannt. Unter anderem ist dort ein so genannter Optical Switch Module (OSM) mit mehreren Ports zum Anschluss weiterer Netzwerkkomponenten beschrieben. Zum Aufbau eines Ethernet- oder Fast-Ethernet-Netzwerks werden beispielsweise Endgeräte an die Ports angeschlossen und sind somit über das OSM miteinander verbunden. Mehrere OSMs können in einer linienförmigen Struktur zu einer Reihe verschaltet werden. Ein optischer Ring entsteht, wenn die beiden Linienenden an einen Optical Redundancy Manager (ORM) angeschlossen sind. Durch Testtelegramme, welche der ORM in die beiden Linienenden einspeist, wird überprüft, ob eine Unterbrechung innerhalb der Reihe vorhanden ist. Im fehlerfreien Fall, wenn die Reihe also nicht unterbrochen ist, trennt der ORM die beiden Linienenden und im Fehlerfall werden die beiden Linienenden durch den ORM miteinander verbunden. In einem Netzwerk mit mehreren redundanten, optischen Ringen werden zwei optische Ringe über zwei OSMs miteinander gekoppelt. Die beiden, zwischen die optischen Ringe geschalteten OSMs bilden jeweils einen Kommunikationskanal, von denen der eine aktiv und der zweite in einen Standby-Modus geschaltet ist. Ihre Statusinformationen tauschen die beiden OSMs über spezielle Standby-Ports aus, die durch Kabel miteinander verbunden sind. Fällt die Verbindung über den aktiven OSM aus, so gibt der redundante OSM seinen Kommunikationskanal frei, das heißt, er schaltet vom Standby-Modus in den Aktiv-Modus um. Auf diese Weise wird eine vergleichsweise kurze Rekonfigurationszeit erreicht. Damit wird verhindert, dass physikalische Fehler, vorübergehende elektromagnetische Störungen, Netzwerkerweiterungen oder ein Komponentenaustausch die Kommunikation zwischen den Netzwerkkomponenten unzulässig lange beeinträchtigen. Nachteilig dabei ist, dass zwei zusätzliche Geräte für die redundante Verbindung zweier optischer Ringe erforderlich sind, die zudem durch Kabel miteinander verbunden werden müssen. Zur Vermeidung dieses Nachteils wird in der oben genannten Patentschrift vorgeschlagen, dass ein Switch-Modul, das sich am aktiven Kommunikationskanal befindet, so genannte Port-Select-Telegramme bei unterbrechungsfreiem Kommunikationskanal zyklisch an die anderen Switch-Module sendet, die in derselben Reihe angeordnet sind. Das Switch-Modul, das sich im Standby-Modus am anderen Kommunikationskanal befindet, überwacht den ersten Kommunikationskanal durch Auswerten der Port-Select-Telegramme. Bei dem bekannten Netzwerk wird zwar ebenfalls eine vergleichsweise kurze Rekonfigurationszeit erreicht, die Konfiguration der Switch-Module in der Anlaufphase des Netzwerks wird jedoch in nachteiliger Weise mit einem aufwendigen Algorithmus durchgeführt und nimmt wegen der Vielzahl der zu versendenden Telegramme eine längere Zeit in Anspruch.

Weitere Netzwerke mit Redundanzmanagement sind aus den Druckschriften EP-A-0 403 763 und EP-A-0 560 122 bekannt.

Das standardisierte Spanning-Tree-Protokoll und Rapid-Spanning-Tree-Protokoll ermöglichen ebenfalls ein Redundanzmanagement in einem Ethernet-Netzwerk. Diese Verfahren sind jedoch in der industriellen Kommunikation wegen der hohen Rekonfigurationszeiten nicht immer einsetzbar, insbesondere, wenn Zeitinterwalle im Sekundenbereich, in denen die Datenkommunikation gestört ist, nicht zulässig sind.

Aus der US-A-5 537 532 ist ein Netzwerk mit Redundanzeigenschaften bekannt, das einer Ethernet-Spezifikation genügt. Es wird ein Verfahren zur Ermittlung von redundanten Verbindungen angegeben, bei welchem ein Netzknoten für jede Verbindung, für die er ein Endknoten ist, bestimmt, ob er als Master oder Slave für diese Verbindung handelt. Diese Bestimmung erfolgt abhängig von einem vorbestimmten Kriterium, nämlich dem Wert der Identität des anderen Endknotens für die Verbindung. Redundante Verbindungen werden über das Aussenden von Pfadfindernachrichten durch den Master ermittelt.

Aus der CN-A-1 665 198 ist ein Netzwerk mit mehreren Switches bekannt, in welchem ein Master-Switch anhand der Media Access Control (MAC)-Adressen verwendeter Switches ausgewählt wird.

Der Erfindung liegt die Aufgabe zugrunde, ein Netzwerk mit Redundanzeigenschaften und einen Ethernet-Switch für ein derartiges Netzwerk zu schaffen, die in einer Netzwerkanlaufphase leicht und mit geringem Aufwand konfigurierbar sind.

Zur Lösung dieser Aufgabe weist das neue Netzwerk mit Redundanzeigenschaften, der neue Ethernet-Switch sowie das neue Verfahren zur Konfiguration eines derartigen Netzwerks die in den Ansprüchen 1, 2 bzw. 5 genannten Merkmale auf.

Die Erfindung hat den Vorteil, dass sie eine besonders einfache Konfiguration von redundanten Verbindungen zwischen Segmenten eines Ethernet-Netzwerks, in welchen Ethernet-Switches angeordnet sind, ermöglicht. In besonders anschaulicher Weise erfordert die Konfiguration von einem Anwender lediglich die Eingabe oder Festlegung eines logischen Namens der redundanten Verbindung. Dieser kann frei gewählt werden und wird als Verbindungsname bezeichnet. In einem Netzsegment werden zwei Ethernet-Switches als Gerätepaar konfiguriert. Dieses Gerätepaar überwacht sich im Redundanzbetrieb nach der Konfiguration gegenseitig mit Ethernet-Telegrammen und leitet den Datenverkehr im Fehlerfall von einer Ethernet-Verbindung zu der jeweils anderen, dazu redundanten Verbindung um. Wenn zusätzlich je redundanter Verbindung ein Kopplungsport im Ethernet-Switch konfiguriert wird, ist in vorteilhafter Weise ein portselektives Umschalten zwischen den an einer redundanten Verbindung beteiligten Ethernet-Switches möglich.

Ein Ethernet-Switch, in dessen Speicher ein logischer Name für eine zweite oder weitere redundante Verbindung hinterlegbar ist, hat den Vorteil, dass die weiteren, redundanten Verbindungen in analoger Weise zur Konfiguration der ersten redundanten Verbindung konfigurierbar sind und dass jede redundante Verbindung über eine eigene Redundanz für Link-Down-Ereignisse verfügt. Wenn bei einem Kopplungsport ein Link-Down auftritt, das heißt, wenn die Redundanz bei einem Koppelkanal verloren ist, so hat dies nämlich keinen Einfluss auf die Redundanz der übrigen redundanten Verbindungen, da die Redundanz portselektiv umschaltbar ist.

Durch eine speziell festgelegte Multicast-Adresse, die in den Sondertelegrammen als Ziel-Adresse Verwendung findet, kann die Reichweite der Sondertelegramme im Ethernet-Netzwerk in vorteilhafter Weise eingeschränkt werden, zum Beispiel auf Switches, die in der Lage sind, eine redundante Verbindung aufzubauen. Dabei wird ein besonders einfaches Ordnungskriterium für die Festlegung, welcher Koppelkanal im störungsfreien Betrieb aktiv und welcher deaktiviert ist, geschaffen, wenn in den Ethernet-Switches, welche an einer redundanten Verbindung beteiligt sind, die in den Sondertelegrammen empfangene MAC-Quell-Adresse ausgewertet und mit der eigenen MAC-Adresse verglichen wird. Beispielsweise der Ethernet-Switch, der die höchste MAC-Adresse aufweist, kann per Default-Einstellung als Master festgelegt werden, der wiederum im störungsfreien Betrieb den aktiven Koppelkanal realisiert. Das Ordnungskriterium kann alternativ dazu konfigurierbar sein, zum Beispiel durch Vergabe von nummerischen Werten an die Switches.

Anhand der Zeichnungen, in denen ein Ausführungsbeispiel der Erfindung dargestellt ist, werden im Folgenden die Erfindung sowie Ausgestaltungen und Vorteile näher erläutert.

Es zeigen:
- Figur 1: ein Netzwerk mit Redundanzeigenschaften,
- Figur 2: ein Ablaufdiagramm der Redundanzkonfiguration und
- Figur 3: ein Netzwerk mit drei Netzwerksegmenten.

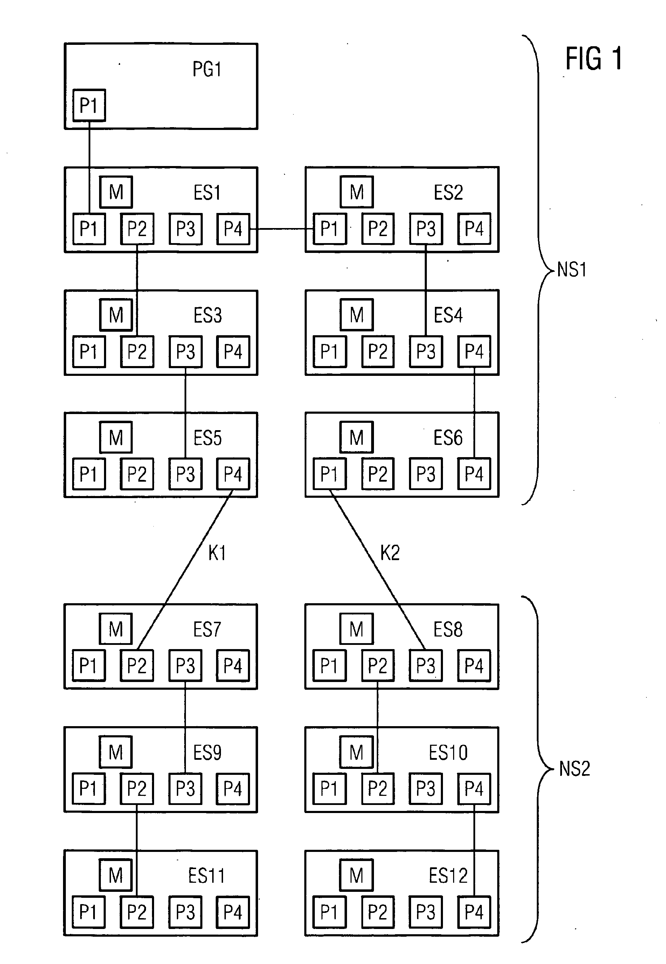

Ein beispielhaftes Netzwerk mit Redundanzeigenschaften besteht gemäß Figur 1 aus zwei Netzwerksegmenten NS1 und NS2, die jeweils sechs Ethernet-Switches ES1...ES6 bzw. ES7...ES12 enthalten. Die Switches weisen jeweils einen Speicher M zur Hinterlegung von Konfigurierdaten und Ports P1...P4 zur Kopplung mit anderen Ethernet-Switches oder Endteilnehmern auf. Es ist selbstverständlich, dass alternativ dazu Switches mit anderer Portanzahl eingesetzt werden können. Zur Datenübertragung zwischen zwei Ethernet-Switches ist jeweils ein Port des einen Switches mit einem Port des anderen Switches verbunden. Beispielsweise ist der Port P3 des Ethernet-Switches ES2 an den Port P3 des Ethernet-Switches ES4 angeschlossen. Zwei Koppelkanäle K1 und K2 bilden eine redundante Verbindung zwischen den beiden Netzwerksegmenten NS1 und NS2. Der erste Koppelkanal K1 ist durch eine Verbindung des Ports P4 des Ethernet-Switches ES5, der im Netzwerksegment NS1 angeordnet ist, mit dem Port P2 des Ethernet-Switches ES7, der im Netzwerksegment NS2 angeordnet ist, gebildet. Eine Verbindung des Ports P1 des Ethernet-Switches ES6 im Netzwerksegment NS1 mit dem Port P3 des Ethernet-Switches ES8 im Netzwerksegment NS2 realisiert den zweiten Koppelkanal K2 der redundanten Verbindung. Ein Programmiergerät PG1, das mit einem Port P1 an den Port P1 des Ethernet-Switches ES1 angeschlossen ist, dient zur Konfigurierung des Netzwerks mit geeigneten Eingaben eines Benutzers. Dazu verfügt das Programmiergerät PG1 über geeignete Bedienelemente, wie beispielsweise eine Anzeigeeinheit und eine Tastatur, die in der Figur der Übersichtlichkeit wegen nicht dargestellt sind. Die Konfigurierung kann beispielsweise mit Hilfe einer Webseite, die aus einem zu konfigurierenden Switch in das Programmiergerät PG1 geladen wird, oder mit einem Konfiguriertool, beispielsweise einem SNMP-Tool (Simple Network Management Protocol-Tool), das als Programm auf dem Programmiergerät PG1 abläuft, erfolgen. Bei der Konfiguration wird ein logischer Name, der die redundante Verbindung zwischen den beiden Netzwerksegmenten NS1 und NS2 bezeichnet, in den jeweiligen Speicher M der Ethernet-Switches ES5 und ES6 eingetragen. Weiterhin wird im jeweiligen Speicher M der Kopplungsport hinterlegt, der für die redundante Verbindung genutzt wird. Im Falle des Ethernet-Switches ES5 ist dies der Port P4, beim Ethernet-Switch ES6 der Port P1. In einer Netzwerkanlaufsphase ermitteln die beiden Ethernet-Switches ES5 und ES6 jeweils durch Verteilen von Sondertelegrammen, in welche sie den logischen Namen der redundanten Verbindung eintragen, den jeweils anderen, zur selben redundanten Verbindung gehörigen Ethernet-Switch ES6 bzw. ES5. Anhand eines Ordnungskriteriums, beispielsweise gemäß der eigenen MAC-Adresse im Netzwerk, legen die beiden Ethernet-Switches ES5 und ES6 fest, welcher Koppelkanal im störungsfreien Betrieb aktiv und welcher deaktiviert ist. Zur Redundanzüberwachung im Redundanzbetrieb erhält beispielsweise der Ethernet-Switch ES6, der im Netzwerk die höchste MAC-Adresse hat, die Funktion eines Masters, während der Ethernet-Switch ES5 mit der niedrigeren MAC-Adresse als Slave betrieben wird. In zyklisch versendeten Unicast-Telegrammen teilt der Master dem Slave den Zustand seines Kopplungsports mit. Sendet der Ethernet-Switch ES6 als Zustand des Kopplungsports P1 "Link-Up", so bleibt der Kopplungsport P4 des Ethernet-Switches ES5 deaktiviert. Sendet dagegen der Ethernet-Switch ES6 als Zustand "Link-Down" oder empfängt der Ethernet-Switch ES5 länger als einen vorgegebenen Zeitraum keine derartigen Telegramme mehr, so erkennt er den Ausfall des Koppelkanals des Partnergeräts, in diesem Fall des Ethernet-Switches ES6, und aktiviert seinen Kopplungsport P4. Somit ist im fehlerfreien Betrieb, das heißt, wenn sich der Kopplungsport P1 des Ethernet-Switches ES6 im Zustand Link-Up befindet, nur der Kopplungsport P1 des Ethernet-Switches ES6 als Master aktiv. Wenn der Kopplungsport P1 des Masters in den Zustand Link-Down übergeht, wird der zur selben redundanten Verbindung gehörige Kopplungsport P4 des Ethernet-Switches ES5 aktiviert. Die Zykluszeit, mit welcher die Telegramme des Masters versendet werden, ist abhängig von der geforderten Rekonfigurationszeit des Netzwerks. Bei einer maximalen Rekonfigurationszeit von etwa 100 ms wird beispielsweise eine Zykluszeit von 10 ms bevorzugt, da das Netzwerk bei dieser Wahl durch die zyklisch versendeten Telegramme nur eine geringe zusätzliche Last erfährt.

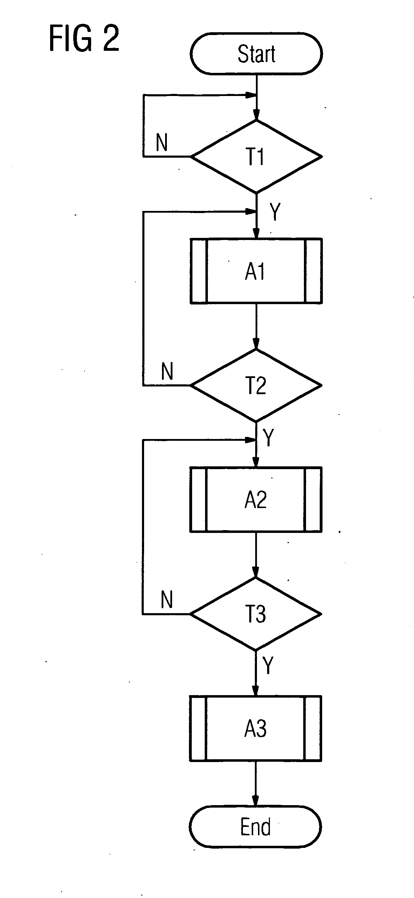

Anhand des Ablaufdiagramms in Figur 2 wird im Folgenden die Konfiguration des Netzwerks in der Netzwerkanlaufphase näher beschrieben. Mit dem Start beginnt das Verfahren. In einer Abzweigung T1 prüft der Ethernet-Switch, ob bereits ein logischer Name für die redundante Verbindung, beispielsweise der Name "Netz2", der für alle Ethernet-Switches derselben redundanten Verbindung gleich ist, in den jeweiligen Speicher M (Figur 1) eingetragen wurde. Sobald bei dem Ethernet-Switch ein Verbindungsname eingetragen wurde, geht dieser in einen Zustand "keine Verbindung" entsprechend einer Aktion A1. In diesem Zustand handelt der Ethernet-Switch folgendermaßen:

Der Ethernet-Switch sendet zyklisch Multicast-Telegramme mit einer für das Verfahren speziell festgelegten MAC-Multicast-Adresse als Ziel-Adresse, mit der eindeutigen MAC-Unicast-Adresse des jeweiligen Ethernet-Switches als Quell-Adresse und mit dem logischen Verbindungsnamen, welcher der jeweiligen redundanten Verbindung zugewiesen wurde. Der zur redundanten Verbindung gehörige Koppelport bleibt deaktiviert.

Sobald der Ethernet-Switch im Zustand "keine Verbindung" ein gültiges Telegramm mit der oben genannten, festgelegten MAC-Multicast-Adresse empfangen hat, vergleicht er den darin enthaltenen Verbindungsnamen mit dem im eigenen Speicher M abgelegten. Ergibt der Vergleich eine Übereinstimmung, so geht der Ethernet-Switch entsprechend einem Pfad Y nach einer Verzweigung T2, in welcher der Vergleich stattgefunden hat, in einen Zustand "Verbindung aufgebaut" über. Bei einem derartigen Empfangstelegramm kann es sich nur um das Telegramm des redundanten Partnergeräts handeln. Der jeweils andere, zur selben redundanten Verbindung zugehörige Ethernet-Switch ist somit ermittelt.

Der Ethernet-Switch sendet in einer Aktion A2 nun zyklische Unicast-Telegramme an das ermittelte Partnergerät. Diese Unicast-Telegramme enthalten die eindeutige MAC-Unicast-Adresse des Partnergeräts als Ziel-Adresse, die eindeutige MAC-Unicast-Adresse des Ethernet-Switches, der den Verfahrensablauf abwickelt, als Quell-Adresse und den Linkstatus des definierten Kopplungsports. In einer darauf folgenden Verzweigung T3 überprüft der Ethernet-Switch, ob dazu korrespondierende Telegramme mit der MAC-Unicast-Adresse des Partnergeräts als Quell-Adresse empfangen werden. Ist dies der Fall, wird zur Aktion A3 übergegangen. Bei der Aktion A3 legt der Ethernet-Switch die Master/Slave-Rollenverteilung fest. Dies erfolgt nach einem Ordnungskriterium. Beispielsweise wird der Ethernet-Switch mit der höchsten MAC-Unicast-Adresse Master. Wird der Ethernet-Switch selbst zum Master, so sendet er den Status seines festgelegten Kopplungsports an den Slave. Je nach empfangenem Status aktiviert oder deaktiviert dieser seinen Kopplungsport. Wird für den Kopplungsport des Masters der Status "Link-Down" in einem Telegramm empfangen, so wird oder bleibt der Kopplungsport des Slaves aktiviert. Falls dagegen der Status "Link-Up" aus dem Telegramm gelesen wird, wird oder bleibt der Kopplungsport des Slaves deaktiviert. Diese Vorgehensweise findet in gleicher Weise im Redundanzbetrieb Anwendung, der sich an "End" im Ablaufdiagramm anschließt.

Sobald ein Slave im Zustand "Verbindung aufgebaut" kein Telegramm mehr vom Master empfängt, aktiviert er den Kopplungsport und geht in den Zustand "keine Verbindung" über. Damit kann sich die Redundanz in vorteilhafter Weise nach der Neuhinzufügung eines Partnergeräts einer redundanten Verbindung automatisch neu konfigurieren.

Zu Diagnosezwecken kann zusätzlich die Überwachung des Slaves mit Hilfe von zyklischen Telegrammen des Slaves erfolgen, die vom Master ausgewertet werden.

An dem gezeigten Ablauf wird deutlich, dass das Verfahren die redundante Kopplung von physikalischen und virtuellen Netzwerksegmenten sowie von Netzwerksegmenten, in denen drahtlose Übertragungsstrecken mit drahtgebundenen kombiniert sind, behandeln kann.

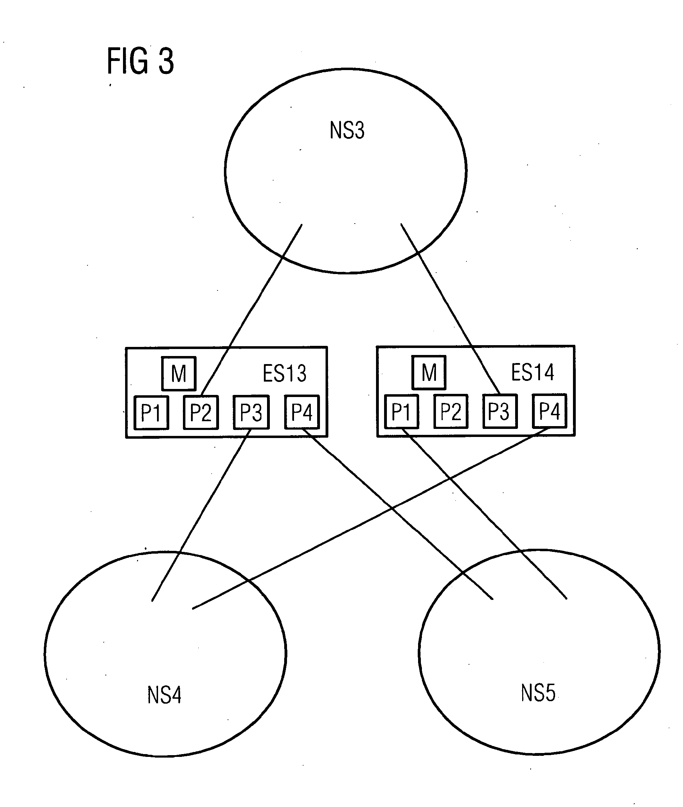

In dem in Figur 3 gezeigten Ausführungsbeispiel sind drei Netzwerksegmente NS3, NS4 und NS5 über zwei Ethernet-Switches ES13 und ES14 redundant gekoppelt. In den jeweiligen Speicher M der Ethernet-Switches ES13 und ES14 wird zur Redundanzkonfiguration sowohl ein logischer Name, beispielsweise "Netz4", als auch ein logischer Name, zum Beispiel "Netz5", für die redundante Verbindung zwischen dem Netzwerksegment NS3 und dem Netzwerksegment NS4 bzw. zwischen dem Netzwerksegment NS3 und dem Netzwerksegment NS5 eingetragen. Der redundanten Verbindung "Netz4" ist dabei im Ethernet-Switch ES13 der Kopplungsport P3 und im Ethernet-Switch ES14 der Kopplungsport P4 zugeordnet. Entsprechend ist der redundanten Verbindung "Netz5" der Kopplungsport P4 des Ethernet-Switches ES13 und der Kopplungsport P1 des Ethernet-Switches ES14 zugehörig. Für jede redundante Verbindung läuft das Verfahren zur Konfiguration in der anhand den Figuren 1 und 2 beschriebenen Weise ab. Wenn bei einem Kopplungsport, beispielsweise dem Kopplungsport P3, ein Link-Down auftritt, das heißt die Redundanz bei der redundanten Verbindung "Netz4" verloren geht, so hat dies keinen Einfluss auf die Redundanz der weiteren redundanten Verbindung "Netz5". Das Verfahren erlaubt somit ein portselektives Umschalten zwischen Master und Slave, das heißt, jede redundante Verbindung verfügt über eine eigene Redundanz für Link-Down-Ereignisse.

## Patentansprüche

1. Netzwerk mit Redundanzeigenschaften, das einer Ethernet-Spezifikation genügt und das zumindest zwei, mit mehreren Ethernet-Switches (ES1...ES12) gebildete Netzwerksegmente (NS1, NS2) enthält, die über eine redundante Verbindung aus zumindest zwei Koppelkanälen (K1, K2) miteinander verbunden sind, wobei der erste Koppelkanal (K1) durch eine Verbindung eines ersten Ports (P4) eines ersten Ethernet-Switches (ES5), der im ersten Netzwerksegment (NS1) angeordnet ist, mit einem zweiten Port (P2) eines zweiten Ethernet-Switches (ES7), der im zweiten Netzwerksegment (NS2) angeordnet ist, gebildet ist, und wobei der zweite Koppelkanal (K2) durch eine Verbindung eines dritten Ports (P1) eines dritten Ethernet-Switches (ES6), der im ersten Netzwerksegment (NS1) angeordnet ist, mit einem vierten Port (P3) eines vierten Ethernet-Switches (ES8), der im zweiten Netzwerksegment (NS2) angeordnet ist, gebildet wird, mit einem Programmiergerät (PG1), durch welches bei der Konfigurierung des Netzwerks in dem ersten und dem dritten Ethernet-Switch (ES5, ES6) ein logischer Name für die redundante Verbindung hinterlegbar und der erste bzw. dritte Port (P4, P1) als Kopplungsport bestimmbar ist, wobei der erste und der dritte Ethernet-Switch (ES5, ES6) dazu ausgebildet sind, in einer Netzwerkanlaufphase durch Verteilen von Sondertelegrammen, in welche sie den logischen Namen der redundanten Verbindung eintragen, den jeweils anderen, zur selben redundanten Verbindung zugehörigen, dritten bzw. ersten Ethernet-Switch (ES6, ES5) zu ermitteln und anhand eines Ordnungskriteriums festzulegen, welcher Koppelkanal im störungsfreien Betrieb aktiv und welcher deaktiviert ist.

2. Ethernet-Switch zur Verwendung als ein erster Ethernet-Switch (ES5) in einem Netzwerk mit Redundanzeigenschaften, das einer Ethernet-Spezifikation genügt und das zumindest zwei, mit mehreren Ethernet-Switches (ES1...ES12) gebildete Netzwerksegmente (NS1, NS2) enthält, die über eine redundante Verbindung aus zumindest zwei Koppelkanälen (K1, K2) miteinander verbunden sind, wobei der erste Koppel kanal (K1) durch eine Verbindung eines ersten Ports (P4) des ersten Ethernet-Switches (ES5), der im ersten Netzwerksegment (NS1) angeordnet ist, mit einem zweiten Port (P2) eines zweiten Ethernet-Switches (ES7), der im zweiten Netzwerksegment (NS2) angeordnet ist, gebildet ist und wobei der zweite Koppelkanal (K2) durch eine Verbindung eines dritten Ports (P1) eines dritten Ethernet-Switches (ES6), der im ersten Netzwerksegment (NS1) angeordnet ist, mit einem vierten Port (P3) eines vierten Ethernet-Switches (ES8), der im zweiten Netzwerksegment (NS22) angeordnet ist, gebildet wird, wobei der erste Ethernet-Switch (ES5) derart ausgebildet ist, dass in seinem Speicher (M) ein logischer Name für die redundante Verbindung hinterlegbar und ein erster Port (P4) als Kopplungsport bestimmbar ist, und dass der Ethernet-Switch (ES5) weiterhin dazu ausgebildet ist, in einer Netzwerkanlaufphase Sondertelegramme, in welche er den logischen Namen der redundanten Verbindung und seine MAC-Adresse einträgt, zu versenden und bei Empfang eines entsprechenden Sondertelegramms von dem dritten Ethernet-Switch (ES6) diesen als zur selben redundanten Verbindung zugehörig zu ermitteln und anhand eines Ordnungskriteriums festzulegen, welcher Koppelkanal im störungsfreien Betrieb aktiv und welcher deaktiviert ist.

3. Ethernet-Switch nach Anspruch 2, **dadurch gekennzeichnet, dass** in seinem Speicher (M) logische Namen für eine zweite und/oder weitere redundante Verbindungen hinterlegbar sind.

4. Ethernet-Switch nach Anspruch 2 oder 3, **dadurch gekennzeichnet, dass** die Sondertelegramme als Multicast-Telegramme ausgebildet sind und dass der Ethernet-Switch (ES5) weiterhin dazu ausgebildet ist, bei Empfang eines Sondertelegramms den darin enthaltenen logischen Namen einer redundanten Verbindung mit einem eigenen, abgespeicherten zu vergleichen und bei Gleichheit die im Telegramm enthaltene MAC-Quell-Adresse und die eigene MAC-Adresse als Ordnungskriterium auszuwerten.

5. Verfahren zur Konfiguration eines Netzwerks mit Redundanzeigenschaften nach Anspruch 1, das einer Ethernet-Spezifikation genügt und das zumindest zwei, mit mehreren Ethernet-Switches (ES1...ES12) gebildete Netzwerksegmente (NS1, NS2) enthält, die über eine redundante Verbindung aus zumindest zwei Koppelkanälen (K1, K2) miteinander verbunden sind, wobei der erste Koppelkanal (K1) durch eine Verbindung eines ersten Ports (P4) eines ersten Ethernet-Switches (ES5), der im ersten Netzwerksegment (NS1) angeordnet ist, mit einem zweiten Port (P2) eines zweiten Ethernet-Switches (ES7), der im zweiten Netzwerksegment (NS2) angeordnet ist, gebildet wird, und wobei der zweite Koppelkanal (K2) durch eine Verbindung eines dritten Ports (P1) eines dritten Ethernet-Switches (ES6), der im ersten Netzwerksegment (NS1) angeordnet ist, mit einem vierten Port (P3) eines vierten Ethernet-Switches (ES8), der im zweiten Netzwerksegment (NS2) angeordnet ist, gebildet wird, wobei durch ein Programmiergerät (PG1) bei der Konfigurierung des Netzwerks in dem ersten und dem dritten Ethernet-Switch (ES5, ES6) ein logischer Name für die redundante Verbindung hinterlegt wird und wobei der erste und der dritte Ethernet-Switch (ES5, ES6) in einer Netzwerkanlaufphase durch Verteilen von Sondertelegrammen, in welche sie den logischen Namen der redundanten Verbindung eintragen, den jeweils anderen, zur selben redundanten Verbindung zugehörigen, dritten bzw. ersten Ethernet-Switch (ES6, ES5) ermitteln und anhand eines Ordnungskriteriums festlegen, welcher Koppelkanal im störungsfreien Betrieb aktiv und welcher deaktiviert wird.

## Claims

1. Network having redundancy properties, wherein said network complies with an Ethernet specification and contains at least two network segments (NS1, NS2) which are formed using a plurality of Ethernet switches (ES1...ES12) and are connected to each other via a redundant connection comprising at least two coupling channels (K1, K2), wherein the first coupling channel (K1) is formed by a connection of a first port (P4) of a first Ethernet switch (ES5) which is arranged in the first network segment (NS1) to a second port (P2) of a second Ethernet switch (ES7) which is arranged in the second network segment (NS2), and wherein the second coupling channel (K2) is formed by a connection of a third port (P1) of a third Ethernet switch (ES6) which is arranged in the first network segment (NS1) to a fourth port (P3) of a fourth Ethernet switch (ES8) which is arranged in the second network segment (NS2), comprising a programming device (PG1) by means of which a logical name for the redundant connection can be stored in the first and the third Ethernet switch (ES5, ES6) and the first or third port (P4, P1) can be specified as a coupling port when the network is being configured, wherein the first and the third Ethernet switches (ES5, ES6) are designed to identify, during a network startup phase, the respective other third or first Ethernet switch (ES6, ES5) belonging to the same redundant connection by distributing special messages in which they enter the logical name of the redundant connection and, on the basis of a defining criterion, to determine which coupling channel is active during error-free operation and which is deactivated.

2. Ethernet switch for use as a first Ethernet switch (ES5) in a network having redundancy properties, wherein said network complies with an Ethernet specification and contains at least two network segments (NS1, NS2) which are formed using a plurality of Ethernet switches (ES1...ES12) and are connected to each other via a redundant connection comprising at least two coupling channels (K1, K2), wherein the first coupling channel (K1) is formed by a connection of a first port (P4) of the first Ethernet switch (ES5) which is arranged in the first network segment (NS1) to a second port (P2) of a second Ethernet switch (ES7) which is arranged in the second network segment (NS2), and wherein the second coupling channel (K2) is formed by a connection of a third port (P1) of a third Ethernet switch (ES6) which is arranged in the first network segment (NS1) to a fourth port (P3) of a fourth Ethernet switch (ES8) which is arranged in the second network segment (NS2), wherein the first Ethernet switch (ES5) is designed such that a logical name for the redundant connection can be stored in its memory (M) and a first port (P4) can be specified as a coupling port, and wherein the Ethernet switch (ES5) is also designed to send, in a network startup phase, special messages in which it enters the logical name of the redundant connection and its MAC address and, when it receives a corresponding special message from the third Ethernet switch (ES6), to identify the latter as belonging to the same redundant connection and, on the basis of a defining criterion, to determine which coupling channel is active during error-free operation and which is deactivated.

3. Ethernet switch according to claim 2, **characterised in that** logical names for a second and/or further redundant connections can be stored in its memory (M).

4. Ethernet switch according to claim 2 or 3, **characterised in that** the special messages are designed as multicast messages and **in that** the Ethernet switch (ES5) is additionally designed, when a special message is received, to compare the logical name of a redundant connection contained therein with its own stored logical name and, in the event of a match, to analyse the MAC source address contained in the message and the local MAC address as a defining criterion.

5. Method for configuring a network having redundancy properties according to claim 1, wherein said network complies with an Ethernet specification and contains at least two network segments (NS1, NS2) which are formed using a plurality of Ethernet switches (ES1...ES12) and are connected to each other via a redundant connection comprising at least two coupling channels (K1, K2), wherein the first coupling channel (K1) is formed by a connection of a first port (P4) of the first Ethernet switch (ES5) which is arranged in the first network segment (NS1) to a second port (P2) of a second Ethernet switch (ES7) which is arranged in the second network segment (NS2), and wherein the second coupling channel (K2) is formed by a connection of a third port (P1) of a third Ethernet switch (ES6) which is arranged in the first network segment (NS1) to a fourth port (P3) of a fourth Ethernet switch (ES8) which is arranged in the second network segment (NS2), wherein a logical name for the redundant connection is stored in the first and the third Ethernet switch (ES5, ES6) by a programming device (PG1) when the network is configured, and wherein the first and the third Ethernet switches (ES5, ES6) identify, during a network startup phase, the respective other third or first Ethernet switch (ES6, ES5) belonging to the same redundant connection by distributing special messages in which they enter the logical name of the redundant connection and, on the basis of a defining criterion, determine which coupling channel is active during error-free operation and which is deactivated.

## Revendications

1. Réseau ayant des propriétés de redondance qui satisfait à une spécification Ethernet et qui a au moins deux segments ( NS1, NS2 ) de réseau, qui formés par plusieurs switch Ethernet ( ES1...ES12 ) et qui sont reliés entre eux par une liaison redondante composée d'au moins deux canaux ( K1, K2 ) de couplage, le premier canal ( K1 ) de couplage étant formé par une liaison d'un premier accès ( P4 ) d'un premier switch Ethernet ( ES5 ), qui est monté dans le premier segment ( NS1 ) de réseau, à un deuxième accès ( P2 ) d'un deuxième switch Ethernet ( ES7 ), qui est monté dans le deuxième segment ( NS2 ) de réseau, et dans lequel le deuxième canal ( K2 ) de couplage est formé par une liaison d'un troisième accès ( P1 ) d'un troisième switch Ethernet ( ES6 ), qui est monté dans le premier segment ( NS1 ) de réseau, à un quatrième accès ( P3 ) d'un quatrième switch Ethernet ( ES8 ), qui est monté dans le deuxième segment ( NS2 ) de réseau, comprenant un appareil ( PG1 ) de programmation par lequel, lors de la configuration du réseau, il peut être mémorisé dans le premier et dans le troisième switch Ethernet ( ES5, ES6 ) un nom logique pour la liaison redondante et le premier ou le troisième accès ( P4, P1 ) peut être défini comme accès de couplage, le premier et le troisième switch Ethernet ( ES5, ES6 ) étant constitués de manière à déterminer dans une phase de lancement du réseau, par distribution de télégrammes particuliers dans lesquels ils enregistrent le nom logique de la liaison redondante, respectivement l'autre troisième ou quatrième switch Ethernet ( ES6, ES5 ) associé à la même liaison redondante et à fixer au moyen d'un critère d'ordonnancement le canal de couplage, qui est actif en fonctionnement sans panne et celui qui est désactivé.

2. Switch Ethernet à utiliser comme premier switch Ethernet ( ES5 ) dans un réseau ayant des propriétés de redondance, qui satisfait à une spécification Ethernet, et qui comprend au moins deux segments ( NS1, NS2 ) de réseau qui sont formés de plusieurs switch Ethernet ( ES1...ES12 ) et qui sont reliés entre eux par une liaison redondante composée d'au moins deux canaux ( K1, K2 ) de couplage, dans lequel le premier canal ( K1 ) de couplage est formé par une liaison d'un premier accès ( P4 ) du premier switch Ethernet ( ES5 ), qui est monté dans le premier segment ( NS1 ) de réseau, à un deuxième accès ( P2 ) d'un deuxième switch Ethernet ( ES7 ), qui est monté dans le deuxième segment ( NS2 ) de réseau et dans lequel le deuxième canal ( K2 ) de couplage est formé par une liaison d'un troisième accès ( P1 ) d'un troisième switch ( ES6 ), qui est monté dans le premier segment ( NS1 ) , à un quatrième accès ( P3 ) d'un quatrième switch Ethernet ( ES8 ), qui est monté dans le deuxième segment ( NS2 ) de réseau, dans lequel le premier switch Ethernet du premier switch Ethernet ( ES5 ) est constitué de façon à pouvoir mémoriser dans sa mémoire ( M ) un nom logique pour la liaison redondante et de façon à pouvoir déterminer un premier accès ( P4 ) en tant qu'accès de couplage et en ce que le switch Ethernet est constitué, en outre, pour envoyer dans une phase de lancement du réseau des télégrammes particuliers dans lesquels ils portent le nom logique de la liaison redondante et son adresse MAC et, à réception d'un télégramme particulier correspondant par le troisième switch Ethernet ( ES6 ), pour déterminer celui-ci comme associé à la même liaison redondante et fixer au moyen d'un critère d'ordonnancement le canal de couplage, qui est actif en fonctionnement sans panne est celui qui est désactivé.

3. Switch Ethernet suivant la revendication 2, **caractérisé en ce que**, dans sa mémoire ( M ), peuvent être mémorisés des noms logiques pour une deuxième et/ou pour d'autres liaisons redondantes.

4. Switch Ethernet suivant la revendication 2 ou 3, **caractérisé en ce que** les télégrammes particuliers sont constitués sous la forme de télégrammes multicast et **en ce que** le switch Ethernet ( ES5 ) est constitué, en outre, de façon à comparer à réception d'un télégramme particulier le nom logique qui y est contenu d'une liaison redondante à un nom propre qui est mémorisé et à exploiter en tant que critère d'ordonnancement en cas d'égalité, l'adresse source MAC contenue dans le télégramme est l'adresse MAC propre.

5. Procédé de configuration d'un réseau ayant des propriétés de redondance suivant la revendication 1, qui satisfait à une spécification Ethernet et qui comprend au moins deux segments ( NS1, NS2 ) de réseau, qui sont formés de plusieurs switch Ethernet ( ES1...ES12 ) et qui sont reliés entre eux par une liaison redondante composée d'au moins deux canaux ( K1, K2 ) de couplage, dans lequel le premier canal ( K1 ) de couplage est formé par une liaison d'un premier accès ( P4 ) d'un premier switch Ethernet ( ES5 ), qui est monté dans le premier segment ( NS1 ) de réseau, à un deuxième accès ( P2 ) d'un deuxième switch Ethernet ( ES7 ), qui est monté dans le deuxième segment ( NS2 ) de réseau et dans lequel le deuxième canal ( K2 ) de couplage est formé par une liaison d'un troisième accès ( P1 ) d'un troisième switch Ethernet ( ES6 ), qui est monté dans le premier segment ( NS1 ) de réseau, à un premier accès ( P3 ) d'un quatrième switch Ethernet ( ES8 ), qui est monté dans le deuxième segment ( NS2 ) de réseau, dans lequel par un appareil ( PG1 ) de programmation, on mémorise lors de la configuration du réseau un nom logique pour la liaison redondante dans le premier et le troisième switch ( ES5, ES6 ) et dans lequel le premier et le troisième switch Ethernet ( ES5, ES6 ) déterminent dans une phase de lancement du réseau, par distribution de télégrammes particuliers dans lesquels ils enregistrent le nom logique de la liaison redondante, respectivement le troisième ou le premier switch Ethernet ( ES6, ES5 ) associé à la même liaison redondante et fixent au moyen d'un critère d'ordonnancement le canal de couplage, qui est actif en fonctionnement sans panne et celui qui est désactivé.
